# EUROPEAN PATENT APPLICATION

(11) **EP 4 530 378 A1**
(43) Date of publication of application: **02.04.2025**
(21) Application number: 22943610.0
(22) Date of filing: 26.12.2022
(51) Int. Cl.: C25B 9/70, C25B 9/67, C25B 15/02, C25B 15/021

(54) **HYDROGEN PRODUCTION SYSTEM, AND THERMAL MANAGEMENT METHOD AND APPARATUS THEREFOR**

(30) Priority: 23.05.2022 CN 202210564818
(71) Applicant: Sungrow Hydrogen Sci.&Tech. Co., Ltd., Hefei 230088, Anhui (CN)
(72) Inventor: JIN, Jiehong, Hefei, Anhui 230088 (CN); MA, Peichun, Hefei, Anhui 230088 (CN); LI, Jiangsong, Hefei, Anhui 230088 (CN); FAN, Liming, Hefei, Anhui 230088 (CN); ZHANG, Xu, Hefei, Anhui 230088 (CN); BAI, Yang, Hefei, Anhui 230088 (CN)
(74) Representative: Zacco Norway AS
(86) International application number: PCT/CN2022/141960
(87) International publication number: WO 2023/226425

(57) **Abstract**

Disclosed in the present invention are a hydrogen production system, and a thermal management method and apparatus therefor. The hydrogen production system comprises: at least two electrolytic cells; and a post-treatment device, the at least two electrolytic cells sharing the post-treatment device, and the post-treatment device comprising first electrolyte inflow branch pipes and second electrolyte inflow branch pipes, wherein the first electrolyte inflow branch pipes share one set of cooling apparatus and are used for guiding a cold electrolyte into a corresponding electrolytic cell, and the second electrolyte inflow branch pipes are bypass branch pipes of the cooling apparatus and are used for guiding a hot electrolyte into a corresponding electrolytic cell. Compared with the prior art, embodiments of the present invention implement accurate control on the temperature of each electrolytic cell and improve system efficiency.

## Description

The present application claims the priority to Chinese Patent Application No. 202210564818.0, titled "HYDROGEN PRODUCTION SYSTEM, AND THERMAL MANAGEMENT METHOD AND APPARATUS THEREFOR", filed with the China National Intellectual Property Administration on May 23, 2022, which is incorporated herein by reference in its entirety.

### FIELD

The present application relates to the technical field of water-electrolysis hydrogen production, and in particular to a hydrogen production system, a thermal management method and an apparatus therefor.

### BACKGROUND

In a water-electrolytic hydrogen production system with a large-scale renewable energy, in order to increase a hydrogen production capacity of the hydrogen production system while reducing the manufacturing cost of the entire hydrogen production system, a technical solution of sharing single post-treatment equipment by multiple electrolytic cells may be adopted. The operation temperature of the electrolytic cell is a key parameter during the operation of the system. In order to maintain a stable operation temperature, the post-treatment equipment is provided with a heat exchanger and the like for a thermal management of the hydrogen production system.

In the existing technology, for the hydrogen production system combined with renewable energy, an input power is constantly changing, and thus a thermal management control thereof also needs to be adaptively regulated. However, the existing hydrogen production system has defects, which cannot achieve a precise temperature control to each electrolytic cell.

### SUMMARY

A hydrogen production system, a thermal management method and an apparatus therefor are provided in the present application to achieve a precise temperature control of each electrolytic cell and improve efficiency of the system.

According to one aspect of the present application, a hydrogen production system is provided, including:
at least two electrolytic cells; and
a post-treatment equipment, which is shared by the at least two electrolytic cells and includes first electrolyte inflow branch pipes and second electrolyte inflow branch pipes, wherein

the first electrolyte inflow branch pipes share a single cooling device to introduce a cold electrolyte into the corresponding electrolytic cells, and the second electrolyte inflow branch pipes are bypass branch pipes of the cooling device to introduce a hot electrolyte into the corresponding electrolytic cells.

Optionally, the post-treatment equipment further includes:
a gas-liquid separation unit, which is arranged at an electrolyte outlet of the at least two electrolytic cells and shared by the at least two electrolytic cells; and
an electrolyte circulation device arranged in a electrolyte circulation pipeline.

Optionally, a common electrolyte inlet for the first electrolyte inflow branch pipes is arranged downstream of an electrolyte outlet of the cooling device, and
a common electrolyte inlet for the second electrolyte inflow branch pipes is arranged upstream of the electrolyte inlet of the cooling device.

Optionally, a first switch device is provided in each of the second electrolyte inflow branch pipes and is configured to control a flow rate of the hot electrolyte.

Optionally, a second switch device is provided in each of the first electrolyte inflow branch pipes to control a flow rate of the cold electrolyte.

Optionally, the post-treatment equipment further includes
third switch devices provided and corresponding to the electrolytic cells, wherein the third switch device is located at a electrolyte inlet of the corresponding electrolytic cell, and the first electrolyte inflow branch pipe and the second electrolyte inflow branch pipe are connected to the third switch device, the third switch device is configured to control a total flow rate of the electrolyte introduced into the corresponding electrolytic cell.

Optionally, the third switch device includes at least one of a regulating valve and a switching valve.

According to another aspect of the present application, a thermal management method for a hydrogen production system is provided, which is applied to the hydrogen production system according to any embodiment of the present application. The thermal management method includes:
acquiring a working condition of the hydrogen production system in real time;
regulating a flow rate of the cold electrolyte introduced into the electrolytic cells through the first electrolyte inflow branch pipes and a flow rate of the hot electrolyte introduced into the electrolytic cells through the second electrolyte inflow branch pipes according to the working condition, so as to maintain the temperatures of the individual electrolytic cells at the respective preset temperatures.

Optionally, regulating the flow rates of the cold electrolyte and the hot electrolyte introduced into the electrolytic cells according to the working condition includes at least one of the flowing:
in case of the working condition that at least one electrolytic cell needs to be cooled, controlling the flow rate of the cold electrolyte in the first electrolyte inflow branch pipe corresponding to the at least one electrolytic cell to increase, or controlling the flow rate of the hot electrolyte in the second electrolyte inflow branch pipe corresponding to the at least one electrolytic cell to decrease or cut off;
in case of the working condition that at least one electrolytic cell needs to be heated, controlling the flow rate of the hot electrolyte in the second electrolyte inflow branch pipe corresponding to the at least one electrolytic cell to increase, or controlling the flow rate of the cold electrolyte in the first electrolyte inflow branch pipe corresponding to the at least one electrolytic cell to decrease or cut off.

Optionally, a condition that the electrolytic cell needs to be cooled includes that: the temperature of the electrolytic cell in various operating states is higher than a corresponding preset cooling temperature, wherein the preset cooling temperature corresponding to different operating states are same or different, and
a condition that the electrolytic cell needs to be heated includes that: the temperature of the electrolytic cell in various operating states is lower than a corresponding preset heating temperature, wherein the preset heating temperature corresponding to different operating states are same or different.

Optionally, regulating the flow rates of the hot electrolyte and the cold electrolyte introduced into the electrolytic cell according to the working condition includes:
in case that the electrolytic cell is in a standby state, closing the corresponding first electrolyte inflow branch pipe, and
in case that the electrolytic cell in the standby state meets a preset condition, communicating the corresponding second electrolyte inflow branch pipe.

Optionally, after the second electrolyte inflow branch pipe is communicated, the thermal management method further includes:
regulating the flow rate of the hot electrolyte introduced into the corresponding electrolytic cells according to the temperature of the corresponding electrolytic cells.

Optionally, before the step of regulating the flow rate of the cold electrolyte introduced into the electrolytic cells, the thermal management method further includes:
detecting the temperature of the individual electrolytic cells, finding a electrolytic cell having the highest temperature, and defining the electrolytic cell having the highest temperature as a second electrolytic cell; and
regulating a flow rate of a cooling pump in the cooling device according to the temperature of the second electrolytic cell so as to cool the second electrolytic cell by the cold electrolyte after the first electrolyte inflow branch pipe corresponding to the second electrolytic cell is communicated.

Optionally, the thermal management method for the hydrogen production system further includes:
defining the electrolytic cell that is not at the highest temperature as a third electrolytic cell; wherein,
at the time of communicating the first electrolyte inflow branch pipe corresponding to the second electrolytic cell, regulating an opening degree of the corresponding first electrolyte inflow branch pipe and/or the corresponding second electrolyte inflow branch pipe according to a temperature of the third electrolytic cell so as to maintain a constant temperature in the third electrolytic cell.

Optionally, a control method for the cooling pump includes at least one of a PID regulation and a hysteresis regulation,
a control method for the opening degree of the first electrolyte inflow branch pipes includes at least one of the PID regulation and the hysteresis regulation, and
a control method for the opening degree of the second electrolyte inflow branch pipes includes at least one of the PID regulation and the hysteresis regulation.

According to another aspect of the present application, a thermal management apparatus for a hydrogen production system is provided, which is applied to the hydrogen production system according to any embodiment of the present application. The thermal management apparatus includes:
A working condition acquisition module, which is configured to acquire a real-time working condition of the hydrogen production system; and
a temperature regulating module, which is configured to regulate the flow rate of the cold electrolyte introduced into the electrolytic cells through the first electrolyte inflow branch pipes and the flow rate of the hot electrolyte introduced into the electrolytic cells through the second electrolyte inflow branch pipes according to the working condition, so as to maintain the temperature of each electrolytic cell at the preset temperature.

According to the technical solutions of the embodiments of the present application, the post-treatment equipment of the hydrogen production system includes first electrolyte inflow branch pipes and second electrolyte inflow branch pipes, wherein the first electrolyte inflow branch pipes share one cooling device to introduce a cold electrolyte into corresponding electrolytic cells, and the second electrolyte inflow branch pipes are bypass branch pipes of the cooling device to introduce a hot electrolyte into corresponding electrolytic cells. With the arrangement of the first electrolyte inflow branch pipes and the second electrolyte inflow branch pipes, it can not only cool the electrolytic cells when being in operation, but also maintain the electrolytic cells to be in a hot standby state when being in a shutdown state, which is beneficial to the rapid start-up of the electrolytic cells. There is no need to provide separate heating equipment to heat the electrolytic cells. Therefore, in the embodiments of the present application, the operation of cooling and heating to each electrolytic cell can be carried out according to the needs, achieving a precise temperature control of each electrolytic cell while reducing costs and improving the system efficiency. Moreover, according to the embodiments of the present application, the temperature of the electrolytic cell in the hot standby state may be maintained by utilizing the heat generated by the electrolytic cell in operation, achieving a heat-cyclic utilization, which is beneficial to reducing the overall power consumption of the hydrogen production system.

It should be understood that the content described in this section is neither intended to identify key or important features of the embodiments of the present application, nor intended to limit the scope of the present application. Other features of the present application will be easily understood through the following description.

### BRIEF DESCRIPTION OF THE DRAWINGS

In order to illustrate the technical solution in embodiments of the present application more clearly, a brief introduction will be made to the accompanying drawings required in the description of the embodiments. Apparently, the accompanying drawings to be described are merely some embodiments of the present application. For those skilled in the art, other accompanying drawings can be obtained based on these drawings without paying creative efforts.
FIG. 1 is a schematic structural view of a hydrogen production system according to an embodiment of the present application;
FIG. 2 is a schematic structural view of another hydrogen production system according to an embodiment of the present application;
FIG. 3 is a schematic structural view of yet another hydrogen production system according to an embodiment of the present application;
FIG. 4 is a schematic structural view of still another hydrogen production system according to an embodiment of the present application;
FIG. 5 is a flowchart of a thermal management method of a hydrogen production system according to an embodiment of the present application;
FIG. 6 is a flowchart of another thermal management method of a hydrogen production system according to an embodiment of the present application;
FIG. 7 is a flowchart of yet another thermal management method of a hydrogen production system according to an embodiment of the present application;
FIG. 8 is a control block diagram of a PID regulation according to an embodiment of the present application;
FIG. 9 is a control block diagram of another PID regulation according to an embodiment of the present application; and
FIG. 10 is a schematic structural diagram of a thermal management apparatus of a hydrogen production system according to an embodiment of the present application.

### DETAILED DESCRIPTION OF THE EMBODIMENTS

In order to better understand the present application for those skilled in the art, a clear and complete description of the technical solution in embodiments of the present application will be given below in conjunction with the accompanying drawings. Apparently, the described embodiments are only a part of embodiments of the present application rather than all of them. Based on the embodiments of the present application, all other embodiments obtained by those skilled in the art without paying creative work shall fall within the scope of the present application.

It should be noted that the terms "first", "second", etc. in the specification and claims of the present application, as well as the above drawings, are used to distinguish similar objects, and are not intended to describe a specific order or sequence. It should be understood that the data used in this way can be interchanged in appropriate circumstances, so that the embodiments described herein can be implemented in order other than those illustrated or described herein. In addition, the terms "including" and "having", as well as any variations thereof, are intended to cover a non-exclusive inclusion, Exemplarily, a process, method, system, product, or equipment that includes a series of steps or units do not need to be limited to those clearly listed steps or units, but may include other steps or units that are not clearly listed or inherent to the process, method, product, or equipment.

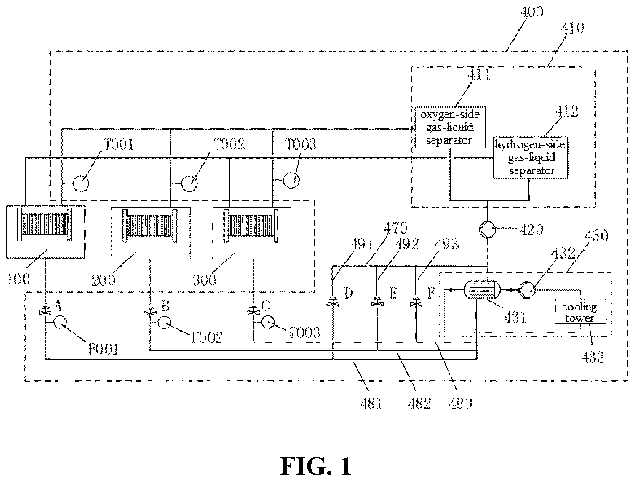

FIG. 1 is a schematic structural view of a hydrogen production system according to an embodiment of the present application, which can adopt any power supply mode or is especially suitable for being supplied with electricity by using a new energy. Referring to FIG. 1, the hydrogen production system includes at least two electrolytic cells (an electrolytic cell 100, an electrolytic cell 200, and an electrolytic cell 300 as exemplarily shown in FIG. 1) and a post-treatment equipment 400. At least two electrolytic cells share the post-treatment equipment 400. The post-treatment equipment 400 includes a first electrolyte inflow branch pipe (first electrolyte inflow branch pipes 481, 482, and 483 as exemplarily shown in FIG. 1) and a second electrolyte inflow branch pipe (second electrolyte inflow branch pipes 491, 492, and 493 as exemplarily shown in FIG. 1). The number of the first and second electrolyte inflow branch pipes may be configured to correspond to the number of the electrolytic cells. Exemplarily, as shown in FIG. 1, the first electrolyte inflow branch pipes correspond to the electrolytic cells in one-to-one manner, and the second electrolyte inflow branch pipes correspond to the electrolytic cells in one-to-one manner. Specifically, the first electrolyte inflow branch pipe 481 and the second electrolyte inflow branch pipe 491 correspond to the electrolytic cell 100; the first electrolyte inflow branch pipe 482 and the second electrolyte inflow branch pipe 492 correspond to the electrolytic cell 200; and the first electrolyte inflow branch pipe 483 and the second electrolyte inflow branch pipe 493 correspond to the electrolytic cell 300. The first electrolyte inflow branch pipes share a single cooling device 430 and are used to introduce a cold electrolyte into the corresponding electrolytic cells. The second electrolyte inflow branch pipes are bypass branch pipes of the cooling device 430 and are used to introduce a hot electrolyte into the corresponding electrolytic cells. In other embodiments, some electrolytic cells may be configured to correspond to the first electrolyte inflow branch pipe or the second electrolyte inflow branch pipe in one-to-two or one-to-many manner, which may be configured according to the needs in the practical use.

When electrolyzing water to produce hydrogen, it is necessary to maintain a stable temperature. However, a large amount of heat is generated in electrolysis process, causing the temperature of the electrolyte to rise. Moreover, the higher the electrolytic power is, the faster the temperature rises, thereby increasing temperature of the electrolytic cells. In order to maintain the stability of the electrolyte temperature, it is necessary to cool the electrolyte. The cooling device 430 can cool the electrolyte flowing out of the electrolytic cells. Exemplarily, all the first electrolyte inflow branch pipes are connected to an electrolyte outlet of the cooling device 430, and thus one cooling device 430 can be shared within all first electrolyte inflow branch pipes. The cold electrolyte (cooled electrolyte) flows into the electrolytic cells through the respective first electrolyte inflow branch pipes so as to decrease the temperature of the corresponding electrolytic cells.

When using a new energy for a power supply, a fluctuation of the power supply of the new energy may cause a fact that multiple electrolytic cells in the hydrogen production system do not operate under a same input power and thus are different in temperature increasing degree. In that case, the cold electrolyte flowing into the first electrolyte branch pipes can be used to adaptively regulate temperature of the electrolytic cells.

Furthermore, due to the fluctuation of the power supply of the new energy, some electrolytic cells in the hydrogen production system may be in a shutdown state, and it is likely for the electrolytic cells that are in a shutdown state to be restarted at any time. In order to quickly reach the rated hydrogen production capacity in the next start-up of the electrolytic cells by a thermal insulation, i.e., keeping in a hot standby state, the hydrogen production system provided by the embodiments of the present application further includes a second electrolyte inflow branch pipe for transporting the hot electrolyte. The second electrolyte inflow branch pipe is a bypass branch pipe of the cooling device 430, that is, the second electrolyte inflow branch pipe bypasses the cooling device 430. The electrolyte in the second electrolyte inflow branch pipes is not cooled, that is, is a hot electrolyte. When being in a shutdown state, the electrolytic cells are naturally heat-dissipated and thus are decreased in temperature. By using the second electrolyte inflow branch pipe to timely supply the hot electrolyte, the temperature of the electrolytic cell can be maintained, which is beneficial to a rapid start-up of the electrolytic cell. At this time, the hot electrolyte functions to keep temperature of the electrolytic cell. This can be achieved by circulating the electrolyte at a small flow rate without the need to additionally increase an electrolyte circulation flow rate. Therefore, in the embodiment of the present application, by providing the second electrolyte inflow branch pipe, it does not need to additionally increase the power consumption of the hydrogen production system.

In summary, with the hydrogen production system provided by the embodiments of the present application, the number of the electrolytic cells in working state may be determined based on the power of the input power source, and the electrolytic cells in working state and the electrolytic cells in hot standby state can share a single post-treatment equipment 400, that is, the post-treatment equipment 400 is always in operation without the repeated shutdown. As such, it is beneficial to improve the hydrogen production capacity of the hydrogen production system while reducing the manufacturing cost of the entire hydrogen production system. Moreover, providing both the first electrolyte inflow branch pipe and the second electrolyte inflow branch pipe can not only cool the electrolytic cells when being in operation, but also maintain the electrolysis cells in a hot standby state when being in a shutdown state, without the need for a separate heating equipment to heat the electrolysis cells, which is beneficial to the rapid start-up of the electrolysis cells. Therefore, in the embodiments of the present application, the individual electrolytic cells can be cooled or heated according to the needs, achieving a precise temperature control of the individual electrolytic cells while reducing costs, and improving the system efficiency. Moreover, according to the embodiments of the present application, the temperature of the electrolytic cell in the hot standby state is maintained by utilizing the heat generated by the electrolytic cell in operation, achieving a heat-cyclic utilization, which is beneficial to reduction of the overall power consumption of the hydrogen production system.

On the basis of the above embodiments, optionally, the post-treatment equipment 400 further includes a gas-liquid separation unit 410 and an electrolyte circulation device 420. Herein, the electrolyte circulation device 420 is configured to power the electrolyte to flow, and the electrolyte circulation device 420 may be, for example, a circulation pump. The electrolyte circulation device 420 may be located at any position in the electrolyte flow path, and it only needs to accordingly adjust the locations of the first electrolyte inflow branch pipe and the second electrolyte inflow branch pipe, which is not limited in the present application. The following will explain several configurations, which cannot be regarded as a limitation to the present application.

Referring to FIG. 1 again, in an embodiment of the present application, optionally, the gas-liquid separation unit 410 is arranged at electrolyte outlets of at least two electrolytic cells. At least two electrolytic cells share the gas-liquid separation unit 410. The electrolyte circulation device 420 is arranged in an electrolyte circulation pipeline. Exemplarily, the electrolyte circulation device 420 is installed between an electrolyte outlet of the gas-liquid separation unit 410 and the electrolyte inlet of the cooling device 430. The gas-liquid separation unit 410 may include an oxygen-side gas-liquid separator 411 and a hydrogen-side gas-liquid separator 412. The oxygen-side gas-liquid separator 411 includes an electrolyte outlet, and the hydrogen-side gas-liquid separator 412 includes an electrolyte outlet. These two electrolyte outlets are converged so as to form the electrolyte outlet of the gas-liquid separation unit 410. All electrolytes in the post-treatment equipment 400 pass through the electrolyte outlet of the gas-liquid separation unit 410, and the outlet pipeline at the electrolyte outlet is the main pipeline for the electrolyte. In this embodiment, the electrolyte circulation device 420 is located at the electrolyte outlet of the gas-liquid separation unit 410, which can provide a circulation power to the electrolyte in the main pipeline.

On the basis of the above embodiments, optionally, a common electrolyte inlet for the individual first electrolyte inflow branch pipes is arranged downstream the electrolyte outlet of the cooling device 430, and a common electrolyte inlet for individual second electrolyte inflow branch pipes is arranged upstream the electrolyte inlet of the cooling device 430. With this arrangement, it ensures that a cold electrolyte is flowing into the first electrolyte inflow branch pipe and a hot electrolyte is flowing into the second electrolyte inflow branch pipe.

Referring to FIG. 1 again, in an embodiment of the present application, optionally, a common electrolyte inlet for the individual second electrolyte inflow branch pipes is arranged at the electrolyte outlet of the electrolyte circulation device 420. Exemplarily, the second electrolyte inflow branch pipe 491 is connected to a pipeline, at which the electrolyte outlet of the electrolyte circulation device 420 is located, through a pipeline 470, and specially, the connection among these pipes may be achieved through a T-joint. The second electrolyte inflow branch pipe 492 is connected to the pipeline 470 through a T-joint, and the second electrolyte inflow branch pipe 493 is connected to the pipeline 470 through a T-joint. An inlet of the pipeline 470 can be regarded as the common electrolyte inlet for the individual second electrolyte inflow branch pipes. With the arrangement in the embodiment of the present application, a driving force for the hot electrolyte in the second electrolyte inflow branch pipe can be provided by the electrolyte circulation device 420, which is beneficial for the second electrolyte inflow branch pipe to obtain a relatively strong circulation power from the electrolyte circulation device 420.

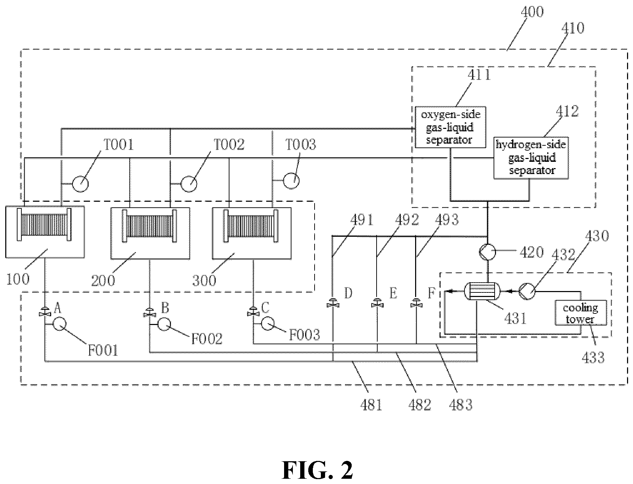

FIG. 2 is a schematic structural view of another hydrogen production system according to an embodiment of the present application. Referring to FIG. 2, in an embodiment of the present application, optionally, the common electrolyte inlet for the individual second electrolyte inflow branch pipes is arranged at the electrolyte inlet of the electrolyte circulation device 420. Herein, the electrolyte circulation device 420 can provide power to the electrolyte in the post-treatment equipment 400. Therefore, regardless of where the common electrolyte inlet for the second electrolyte inflow branch pipes is located, the electrolyte circulation device 420 can provide the circulation power for the hot electrolyte.

In other embodiments, the second electrolyte inflow branch pipes may be connected to different positions, respectively, for example, some of which are connected to the electrolyte inlet of the electrolyte circulation device 420 and some of which are connected to the electrolyte outlet of the electrolyte circulation device 420, which may be arranged according to the needs in practical applications.

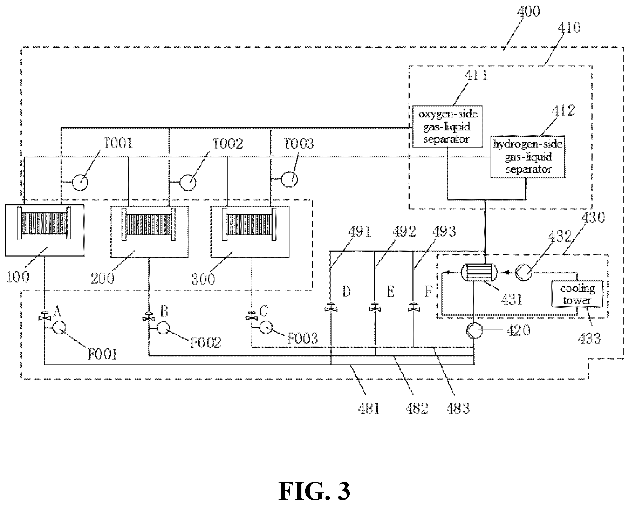

FIG. 3 is a schematic structural view of yet another hydrogen production system according to an embodiment of the present application. Referring to FIG. 3, optionally, this embodiment of the present application is different from the previous embodiments in that the electrolyte circulation device 420 is provided between the electrolyte outlet of the cooling device 430 and the common electrolyte inlet of the first electrolyte inflow branch pipes. That is, the electrolyte circulation device 420 is located in the cold electrolyte pipeline. Herein, compared with the second electrolyte inflow branch pipe, the first electrolyte inflow branch pipe is configured as the main flow path of the electrolyte. In spite of that, the cold electrolyte and the hot electrolyte are eventually converged together. The electrolyte circulation device 420 is provided to provide the circulation power to the cold electrolyte, which is equivalent to providing the circulation power to the overall electrolyte. The second electrolyte inflow branch pipes are also provided with the circulation power.

Referring to FIG. 3 again, in an embodiment of the present application, optionally, the common electrolyte inlet for the individual second electrolyte inflow branch pipes is arranged at the electrolyte inlet of the cooling device 430. Due to the second electrolyte inflow branch pipe bypassing the cooling device 430, the common electrolyte inlet for the individual second electrolyte inflow branch pipes should be arranged upstream the electrolyte inlet of the cooling device 430 and the electrolyte outlet of the individual second electrolyte inflow branch pipes should be arranged downstream the electrolyte outlet of the cooling device 430 regardless where the cooling device 430 and the electrolyte circulation device 420 are located.

On the basis of the above embodiments, optionally, switch devices are further provided in various pipelines to achieve a flow control of the corresponding pipelines. Herein, the arrangements of the switch devices may be varied, and the following will explain some of them, which cannot be regarded as the limitation to the present application.

Referring to FIGs. 1 to 3 again, in an embodiment of the present application, optionally, a first switch device is provided in the second electrolyte inflow branch pipe, and controls a flow rate of the hot electrolyte. As shown in FIGs. 1 to 3, the first switch device D is located in the second electrolyte inflow branch pipe 491 to control the flow rate of the hot electrolyte flowing into the electrolytic cell 100; the first switch device E is located in the second electrolyte inflow branch pipe 492 to control the flow rate of the hot electrolyte flowing into the electrolytic cell 200; and the first switch device F is located in the second electrolyte inflow branch pipe 493 to control the flow rate of the hot electrolyte flowing into the electrolytic cell 300.

Herein, a certain fluid resistance exists in a flowing process of the electrolyte in both the first electrolyte inflow branch pipe and the second electrolyte inflow branch pipe, and the fluid resistance of the cold electrolyte is greater than that of the hot electrolyte. Therefore, when the first switch device is switched on, both the hot electrolyte and the cold electrolyte flow into the corresponding electrolytic cells simultaneously, where the flow rate of the hot electrolyte accounts for a dominant proportion. Specifically, the larger the opening degree of the first switching device is, the greater the flow rate of the hot electrolyte is, resulting in a smaller flow rate of the cold electrolyte. On the contrary, the smaller the opening degree of the first switching device is, the smaller the flow rate of the hot electrolyte is, resulting in a higher flow rate of the cold electrolyte. In the embodiment of the present application, the flow control of the hot electrolyte and the cold electrolyte is achieved only by providing the first switch device on the second electrolyte inflow branch pipe and utilizing the fluid resistance difference between the hot electrolyte and the cold electrolyte. With this arrangement, it is beneficial to simplify the structure of the hydrogen production system and save costs.

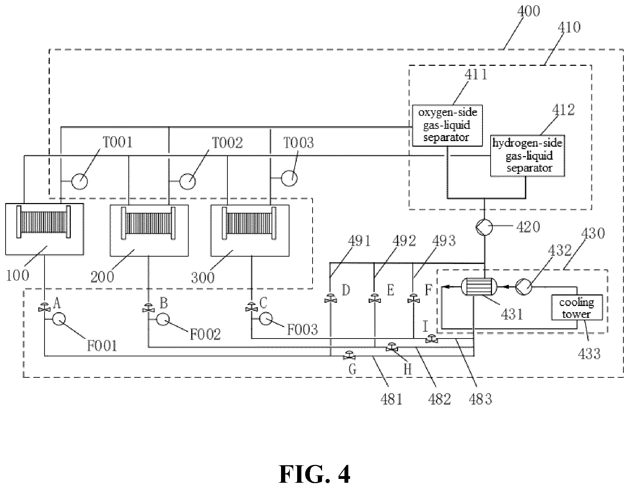

FIG. 4 is a schematic structural view of yet another hydrogen production system according to an embodiment of the present application. Referring to FIG. 4, on the basis of the above embodiments, optionally, a second switch device is provided in the first electrolyte inflow branch pipe to control the flow rate of the cold electrolyte. As shown in FIG. 4, the second switch device G is located in the first electrolyte inflow branch pipe 481 to control the flow rate of the cold electrolyte flowing into the electrolytic cell 100; the second switch device H is located in the first electrolyte inflow branch pipe 482 to control the flow rate of the cold electrolyte flowing into the electrolytic cell 200; and the second switch device I is located in the first electrolyte inflow branch pipe 483 to control the flow rate of cold electrolyte flowing into the electrolytic cell 300.

In the embodiment of the present application, in addition to the first switch devices arranged in the second electrolyte inflow branch pipes, a second switch device is located in each first electrolyte inflow branch pipe, so that the flow rate of the cold electrolyte is controlled by the second switch device and the flow rate of the hot electrolyte is controlled by the first switch device. With this arrangement, it is beneficial to control the proportion between the hot and cold electrolytes, thereby making the temperature control more precise.

Referring to FIGs. 1 to 4, on the basis of the above embodiments, optionally, the post-treatment equipment 400 further includes a third switch device corresponding to the electrolytic cell. The third switch device is located at the electrolyte inlet of the electrolytic cell, and both the first electrolyte inflow branch pipe and the second electrolyte inflow branch pipe are connected to the third switch device. Herein, the third switch device functions as the main switch for the electrolyte flowing into the electrolytic cell, and is used to control the total flow rate of the electrolyte introduced into the electrolytic cell. As exemplarily shown in FIGs. 1 to 4, the third switch device A is located at the electrolyte inlet of the electrolytic cell 100, and introduces mixture of the hot electrolyte and the cold electrolyte and controls the total flow rate into the electrolytic cell 100; the third switch device B is located at the electrolyte inlet of the electrolytic cell 200, and introduces mixture of the hot electrolyte and the cold electrolyte and controls the total flow into the electrolytic cell 200; and the third switch device C is located at the electrolyte inlet of the electrolytic cell 300, and introduces mixture of the hot electrolyte and the cold electrolyte and controls the total flow into the electrolytic cell 300.

In summary, in the embodiment of the present application, the hot electrolyte upstream the cooling device 430 is introduced into the electrolytic cells after passing through the respective third switch device, and thus the regulation of the flow rate of the hot electrolyte does not affect the total flow rate of the electrolyte entering each electrolytic cell. With this arrangement, a decoupling control between the flow control and the temperature control can be achieved for each electrolytic cell, that is, the flow control does not affect the temperature control and vice visa, which is beneficial to a precise temperature control of each electrolytic cell.

Referring to FIGs. 1 to 4 again, on the basis of the above embodiments, optionally, the types of the first switch device, the second switch device, and the third switch device include at least one of a regulating valve and a switching valve. Herein, the switching valve only has two states, i.e., opened and closed states, and the regulating valve can perform a fine flow control. Specifically, the higher the flow rate of the cold electrolyte is, the higher the cooling efficiency of the electrolytic cell is; and the lower the flow rate of the cold electrolyte is, the lower the cooling efficiency of the electrolytic cell is. On the contrary, the higher the flow rate of the hot electrolyte is, the higher the heating efficiency of the electrolytic cell is; and the lower the flow rate of the hot electrolyte is, the lower the heating efficiency of the electrolytic cell is. Therefore, a thermal management of the electrolytic cells can be achieved by controlling the respective first, second and third switch devices. The first switch device, the second switch device, and the third switch device may be in the same or different types, which is not limited in the present application.

Referring to FIGs. 1 to 4 again, on the basis of the above embodiments, optionally, the hydrogen production system further includes a flow sensor for detecting the flow rate of the electrolyte flowing into the electrolytic cell. Exemplarily, a flow sensor F001 is provided at the electrolyte inlet of the electrolytic cell 100 to detect the flow rate of the electrolyte flowing into the electrolytic cell 100; a flow sensor F002 is provided at the electrolyte inlet of the electrolytic cell 200 to detect the flow rate of the electrolyte flowing into the electrolytic cell 200; and a flow sensor F003 is provided at the electrolyte inlet of the electrolytic cell 300 to detect the flow rate of the electrolyte entering electrolytic cell 300.

Referring to FIGs. 1 to 4 again, on the basis of the above embodiments, optionally, the hydrogen production system further includes a temperature sensor for detecting the temperature of the electrolyte flowing out of the electrolytic cell, i.e. for detecting the temperature of the electrolytic cell. Exemplarily, a temperature sensor T001 is provided in the oxygen-side outlet pipeline of the electrolytic cell 100 to detect the temperature of the electrolyte in the electrolytic cell 100; a temperature sensor T002 is provided in the oxygen-side outlet pipeline of the electrolytic cell 200 to detect the temperature of the electrolyte in the electrolytic cell 200; and a temperature sensor T003 is provided in the oxygen-side outlet pipeline of the electrolytic cell 300 to detect the temperature of the electrolyte in the electrolytic cell 300. In other embodiments, the temperature sensor may also be provided at other locations, e.g., in the hydrogen-side outlet pipeline of the electrolytic cell.

Referring to FIGs. 1 to 4 again, on the basis of the above embodiments, optionally, the cooling device 430 is a water-cooling device. The cooling device 430 includes a heat exchanger 431, a cooling pump 432, and a cooling tower 433. The cooling pump 432 drives a coolant in the cooling tower 433 to flow into the heat exchanger 431, and the hot electrolyte also flows into the heat exchanger 431. The coolant exchanges heat with the hot electrolyte inside the heat exchanger 431 to cool the hot electrolyte. Specifically, the higher the circulating flow rate of the coolant is, the higher the cooling efficiency of the hot electrolyte is. On the contrary, the lower the circulation flow rate of the coolant is, the lower the cooling efficiency of the hot electrolyte is. Therefore, a thermal management of the hydrogen production system can be achieved by controlling the cooling pump 432.

Referring to FIGs. 1 to 4 again, on the basis of the above embodiments, optionally, the electrolyte circulation device 420 is a variable-power circulation pump. Specifically, the higher the circulating flow rate of the electrolyte is, the higher the cooling/heating efficiency of the electrolyte is. On the contrary, the lower the circulation flow rate of the electrolyte is, the lower the cooling/heating efficiency of the electrolyte is. Therefore, a thermal management of the hydrogen production system can be achieved by controlling the electrolyte circulation device 420.

On the basis of the above embodiments, optionally, the hydrogen production system further includes a controller. The automatic regulating devices including the temperature sensor, the flow sensor, the switch device, the electrolyte circulation device, and the cooling pumps are all connected to the controller. The controller controls the automatic regulating device based on the collected temperature and flow rate in combination with corresponding thermal management strategy. For example, the control strategy may be a PID regulation or a hysteresis regulation. Optionally, the controller may be a programmable logic controller (PLC) or a distributed control system (DSC), etc.

It should be noted that, in the above embodiments, exemplarily, the first electrolyte inflow branch pipes correspond to the electrolytic cells in one-to-one manner, and the second electrolyte inflow branch pipes correspond to the electrolytic cells in one-to-one manner. In a temperature control loop, an alkaline solution flow rate of each electrolytic cell may be controlled independently, so the power and the alkaline solution flow rate of the electrolytic cell can be provided according to the needs so as to adapt to a scenario of the hydrogen production with a variable power, which is not a limitation to the present application. In other embodiments, no second electrolyte inflow branch pipes are provided for some of the electrolytic cells. For example, some of the electrolytic cells are always in an operating state and do not need to be in a hot standby state, so that it is not necessary to provide a second electrolyte inflow branch pipe.

It should be noted that, in the above embodiments, exemplarily, an alkaline-electrolysis-water hydrogen production system is taken as an example for illustration, using an alkaline solution as the electrolyte, which cannot be regarded as a limitation to the present application. In other embodiments, the technical solution provided by the embodiments of the present application can also be applied to other hydrogen production systems, e.g., PEM electrolysis-water hydrogen production system. The PEM electrolysis-water hydrogen production uses a perfluorosulfonic acid proton exchange membrane as a solid electrolyte to replace asbestos membrane in an alkaline water hydrogen production electrolysis system, and uses deionized water as the electrolyte.

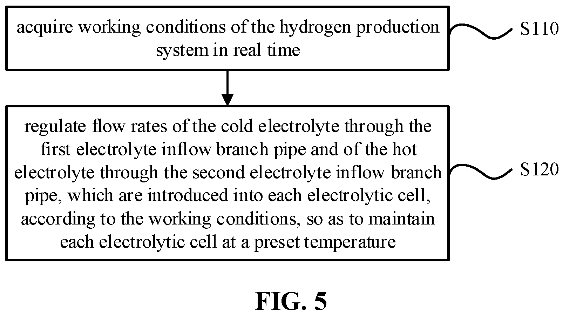

A thermal management method for a hydrogen production system is further provided in the embodiments of the present application, which is applied to the hydrogen production system provided in any embodiment of the present application and has corresponding beneficial effects. The thermal management can be performed by a thermal management apparatus, which may be implemented by software and/or hardware and may be integrated in the controller of the hydrogen production system. FIG. 5 is a flowchart of a thermal management method of a hydrogen production system according to an embodiment of the present application. Referring to FIG. 5, the thermal management method includes the following steps.

S110: acquire a working condition of the hydrogen production system in real time.

The working condition depicts a running condition of the hydrogen production system. Exemplarily, the working condition may include a temperature of the electrolytic cell, an electrolysis power, etc. The working condition may also refer to a running condition of various modules in the post-treatment equipment, an opening degree of switch devices, etc.

S120: according to the working condition, regulate a flow rate of a cold electrolyte introduced into each electrolytic cell through the first electrolyte inflow branch pipe and a flow rate of the hot electrolyte introduced into each electrolytic cell through the second electrolyte inflow branch pipe, so as to maintain the temperature of each electrolytic cell at the corresponding preset temperature.

Herein, the cold electrolyte is used to cool the electrolytic cell, and the hot electrolyte is used to heat the electrolytic cell. The first electrolyte inflow branch pipe and the second electrolyte inflow branch pipe are simultaneously regulated so as to achieve a temperature control of the electrolytic cell. The regulating method includes but is not limited to: opening, closing, increasing, and decreasing. Referring to FIG. 4, exemplarily, the electrolytic cell 100 and the electrolytic cell 200 are running. Correspondingly, the third switch devices A and B are in the opened state and the second switch devices G and H are in the opened state to perform a cold electrolyte circulation. The first switch devices D and E are in the closed state, cutting off the circulation of the hot electrolyte. The opening degrees of the third switch devices A and B are set according to a required flow rate. When the input power of the hydrogen production system changes so that the electrolytic cell 100 needs to be shut down, the first switch device D is gradually opened to be in a fully opened state so as to allow the hot electrolyte to flow into the electrolytic cell 100 and, at the same time, the second switch device G is gradually closed to be in the fully closed state so as to prevent the cold alkali solution from flowing into the electrolytic cell 100.

In the subsequent operation process, as the electrolyte flowing into the electrolytic cell 100 is a hot electrolyte, only a small amount of the hot electrolyte is needed to maintain the temperature of the electrolytic cell 100 to be in the hot standby state for a next start-up. Meanwhile, the temperature of the electrolytic cell 100 is detected in real time. The opening degree of the third switch device A is reduced when the temperature of the electrolytic cell 100 is greater than a preset value, and is increased when the temperature of the electrolytic cell 100 is less than a preset value.

In the embodiments of the present application, the flow rates of the hot electrolyte and the cold electrolyte introduced into each electrolytic cell can be regulated, and the temperature of each electrolytic cell can be increased or decreased as needed. It achieves a precise temperature control of each electrolytic cell while reducing costs, and thus improves system efficiency. Further, according to the embodiments of the present application, the temperature of the electrolytic cell in the hot standby state may be maintained by utilizing the heat generated by the electrolytic cell in operation, achieving a heat-cyclic utilization, which is beneficial to reduction of the power consumption of the hydrogen production system.

On the basis of the above embodiments, there are various ways to regulate the hot electrolyte and the cold electrolyte in the step S120. The following will explain some of them, which cannot be regarded as a limitation to the present application.

In an embodiment of the present application, optionally, regulating the flow rate of the hot electrolyte and the cold electrolyte introduced into each electrolytic cell in S120 includes at least one of the following cases.

In case of the working condition under which at least one electrolytic cell needs to be cooled, the flow rate of the cold electrolyte in the first electrolyte inflow branch pipe corresponding to the electrolytic cell may be controlled to increase, or the flow rate of the hot electrolyte in the second electrolyte inflow branch pipe corresponding to the electrolytic cell may be controlled to decrease or even cut off. Optionally, a condition that the electrolytic cell needs to be cooled includes: the temperature of the electrolytic cell in various operating states is higher than a corresponding cooling set temperature. Herein, the operating states include: a normal operating state, a standby state, an initial operating state, an initial standby state, etc. The cooling set temperatures corresponding to different states are same or different, and can be set according to needs in practical applications. In general, the expression "the electrolytic cell needs to be cooled" means that cooling is needed since a large amount of heat generated by the electrolysis when the electrolytic cell is running. The second electrolyte inflow branch pipe corresponding to the electrolytic cell may be in the closed state. Exemplarily, the electrolytic cell 200 is in normal operating state and the temperature of the electrolytic cell 200 is detected in real time. If the temperature of the electrolytic cell 200 is higher than the first preset temperature value, it indicates that the electrolytic cell 200 needs to be cooled. Thus, the flow rate of the cold electrolyte in the first electrolyte inflow branch pipe 482 may be increased by, for example, increasing the opening degree of the second switch device H. When the electrolytic cell in other states needs to be cooled, a similar regulation method can be used, which will not be repeated.

In case of the working condition under which at least one electrolytic cell needs to be heated, the flow rate of the hot electrolyte in the second electrolyte inflow branch pipe corresponding to the electrolytic cell may be controlled to increase, or the flow rate of the cold electrolyte in the first electrolyte inflow branch pipe corresponding to the electrolytic cell may be controlled to decrease or even cut off. Optionally, the conditions that the electrolytic cell needs to be heated include: the temperature of the electrolytic cell in various operating states is lower than the corresponding heating set temperature. Herein, the operating states include: a normal operating state, a standby state, an initial operating state, an initial standby state, etc. The heating set temperatures corresponding to different states are same or different, and can be set according to needs in practical applications. Exemplarily, the electrolytic cell 300 is in a cold standby state, has not been in operation for a long time, and has no hot electrolyte flowing therein, resulting in a low temperature of the electrolytic cell 300. When the electrolytic cell 300 is to be switched to the initial operating state or the initial standby state, it needs to be heated, and thus the second electrolyte inflow branch pipe 493 is opened, for example, the first switch F is opened, so that the hot electrolyte flows into the electrolytic cell 300. When the electrolytic cell in other states needs to be heated, a similar regulation method can be used, which will not be repeated.

Herein, a flow regulating range for the first electrolyte inflow branch pipe and the second electrolyte inflow branch pipe is between 0 and the maximum flow rate.

On the basis of the above embodiments, optionally, regulating the flow rates of the hot electrolyte and the cold electrolyte introduced into each electrolytic cell according to the working conditions includes: if the electrolytic cell is in a standby state, closing the corresponding first electrolyte inflow branch pipe; and if the electrolytic cell in the standby state meets a preset condition, communicating the corresponding second electrolyte inflow branch pipe. With this configuration, a thermal management of the electrolytic cell with low energy consumption may be achieved.

Optionally, after the second electrolyte inflow branch pipe is communicated, it further includes: regulating the flow rate of the hot electrolyte introduced into the corresponding electrolytic cell according to the temperature of the electrolytic cell to achieve a precise temperature control of the electrolytic cell, which improves the flexibility of the thermal management method.

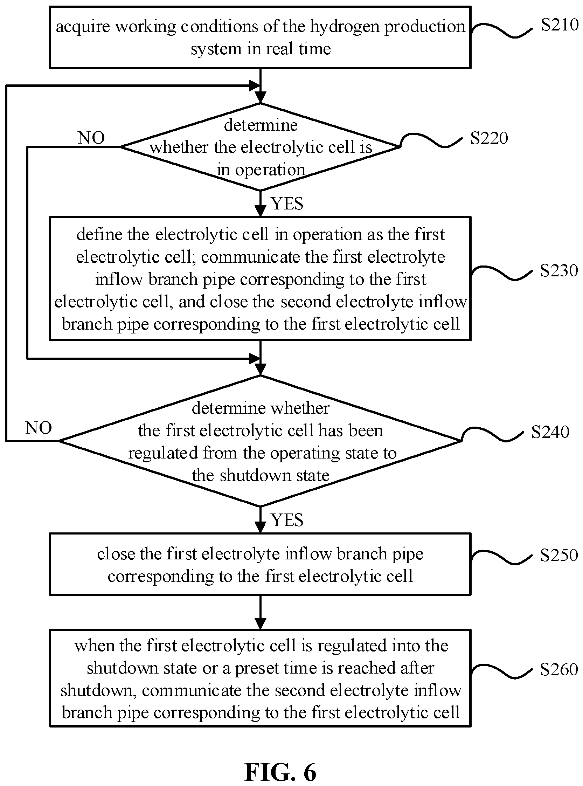

Specifically, FIG. 6 is a flowchart of another thermal management method of a hydrogen production system according to an embodiment of the present application. Referring to FIG. 6, in an embodiment of the present application, optionally, the thermal management method includes the following steps.

S210: acquire a working condition of the hydrogen production system in real time.

S220: determine whether the electrolytic cell is in operation; if yes, execute S230, and if no, execute S240.

S230: define the electrolytic cell in operation as the first electrolytic cell; communicate the first electrolyte inflow branch pipe corresponding to the first electrolytic cell, and close the second electrolyte inflow branch pipe corresponding to the first electrolytic cell.

S240: determine whether the first electrolytic cell has been regulated from the operating state to the shutdown state; if so, execute S250; and if no, execute S220.

S250: close the first electrolyte inflow branch pipe corresponding to the first electrolytic cell.

S260: when the first electrolytic cell is regulated into the shutdown state or when the preset conditions are met, communicate the second electrolyte inflow branch pipe corresponding to the first electrolytic cell.

Referring to FIG. 4, the electrolytic cell 100 is the first electrolytic cell. In an example of S260, the corresponding second electrolyte inflow branch pipe 491 is communicated at the time that the electrolytic cell 100 is regulated into the shutdown state. Meanwhile, the temperature of the electrolytic cell 100 is detected in real time, and the flow rate of the second electrolyte inflow branch pipe 491 is regulated between 0 and the maximum flow rate. In another example of S260, the corresponding second electrolyte inflow branch pipe 491 is communicated only when the preset conditions are met after the electrolytic cell 100 is regulated into the shutdown state. Specifically, the temperature of the electrolytic cell 100 may be detected in real time. The preset conditions are met when the temperature of the electrolytic cell 100 is lower than a second temperature preset value, and thus the corresponding second electrolyte inflow branch pipe 491 corresponding to the electrolytic cell 100 is controlled to be communicated. By introducing the hot electrolyte into the electrolytic cell 100, the temperature of the electrolytic cell 100 can be maintained.

Optionally, if the first switch device in the second electrolyte inflow branch pipe is a switching valve, a precise temperature control of the first electrolytic cell can be achieved by timely opening or closing the switching valve based on a real-time temperature of the first electrolytic cell. If the first switch device in the second electrolyte inflow branch pipe is a regulating valve, the flow rate of the hot electrolyte introduced into the first electrolytic cell can be further regulated according to the temperature of the first electrolytic cell, thereby achieving a precise temperature control of the first electrolytic cell.

The control strategy for switching the operating state to the hot standby state of the first electrolytic cell is achieved through the steps of S210 to S250.

In the above embodiments, it is exemplarily shown that the temperature of the electrolytic cell is regulated by regulating the flow rate of the cold and hot electrolytes, which cannot be regarded as a limitation to the present application. In other embodiments, the temperature of the cold electrolyte may be further regulated according to the power of the cooling device, thereby making the thermal management of the hydrogen production system more comprehensive and adaptable.

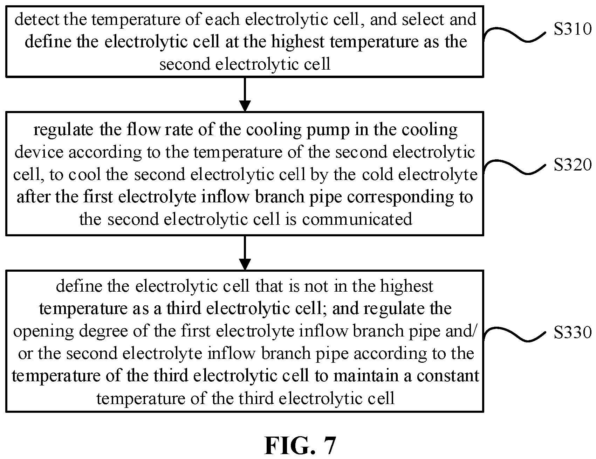

FIG. 7 is a flowchart of yet another thermal management method of a hydrogen production system according to an embodiment of the present application. Referring to FIG. 7, on the basis of the above embodiments, optionally, the thermal management method of the hydrogen production system includes the following steps.

S310: detect the temperature of each electrolytic cell and select the electrolytic cell at the highest temperature; and define the electrolytic cell at the highest temperature as the second electrolytic cell.

Herein, the electrolytic cell at the highest temperature is a key target of the thermal management methods, and the flow rate and the temperature of the coolant should be able to cool the electrolytic cell at the highest temperature and ensure that it operates at an appropriate temperature.

Referring to FIG. 4, exemplarily, the electrolytic cell 200 is the second electrolytic cell. Since the electrolytic cell 200 needs to be cooled, the corresponding first switch device E is switched off to prevent the hot electrolyte from flowing into the electrolytic cell 200. If a second switch device is provided in the hydrogen production system, the second switch device H corresponding to electrolytic cell 200 is opened and the third switch device B is opened at the same time. The cold electrolyte after heat exchange is introduced into the electrolytic cell 200 through the second switch device H and the third switch device B to cool the electrolytic cell 200. Referring to FIG. 1, if the second switch device is not provided in the hydrogen production system, only the third switch device B corresponding to electrolytic cell 200 needs to be switched on. The cold electrolyte after heat exchange is introduced into the electrolytic cell 200 through the third switch device B to cool the electrolytic cell 200.

S320: regulate the flow rate of the cooling pump in the cooling device according to the temperature of the second electrolytic cell, so that the second electrolytic cell is cooled by the cold electrolyte after the first electrolyte inflow branch pipe corresponding to the second electrolytic cell is communicated.

It can be seen from the above description that the flow rate of the cooling pump has a direct impact on the temperature of the cold electrolyte. Specifically, if the flow rate of the cooling pump is increased, the heat exchange efficiency of the coolant with the hot electrolyte is improved, which is beneficial to reduction of the temperature of the electrolyte. If the flow rate of the cooling pump is reduced, the heat exchange efficiency of the coolant with the hot electrolyte is decreased, and the temperature of the electrolyte is increased. In the embodiments of the present application, the flow rate of the cooling pump is regulated according to the second electrolytic cell at the highest temperature, ensuring that the cooling requirements of the electrolytic cell at the highest temperature are met while avoiding the problem of high power consumption caused by an excessive flow rate of the cooling pump.

S330: define the electrolytic cell that is not at the highest temperature as a third electrolytic cell, regulate the opening degree of the corresponding first electrolyte inflow branch pipe and/or the corresponding second electrolyte inflow branch pipe according to the temperature of the third electrolytic cell to maintain a constant temperature of the third electrolytic cell.

Herein, in the hydrogen production system, except for the second electrolytic cell at the highest temperature, all other electrolytic cells are third electrolytic cells. With the aforementioned steps, the temperature of the second electrolytic cell at the highest temperature can be controlled within a required range by the cold electrolyte at its maximum flow rate. Among those third electrolytic cells at a lower temperature, there may be some electrolytic cells at a secondary high temperature which need to be cooled and some electrolytic cell at a low temperature which need to be heated. The temperature of the third electrolytic cells can be regulated by regulating the flow rate of the hot electrolyte or regulating the total flow rate of the electrolyte into the third electrolytic cells. For example, in case that the first switch device is a regulating valve and the third switch device is a switching valve, the flow rate of the electrolyte introduced into the electrolytic cell cannot be regulated by the third switch device, and thus the temperature of the electrolyte can be reasonably increased by switching on the first switch device and regulating the flow rate thereof so as heat the third electrolytic cell. For another example, in case that both the first switch device and the third switch device are regulating valves, the first switch device can be switched off and the flow rate of coolant flowing into the third electrolytic cell can be reduced only by regulating the opening degree of the third switch device.

The control strategy of regulating the temperature of the cold electrolyte in conjunction with the power of the cooling device is achieved through the steps of S310 to S330. Due to that the electrolytic cell at the highest temperature in the hydrogen production system is controlled to not exceed the temperature limit; the electrolytic cell at the secondary high temperature is also controlled to not exceed the temperature limit; and the temperature of the electrolytic cell at a low temperature is gradually increased. Thus, it ensures that all electrolytic cells in the hydrogen production system not only have no risk of overheating but also operate at an optimal operating temperature, achieving a precise temperature control of all electrolytic cells, and avoiding the performance degradation of individual electrolytic cells due to a continuous operation at a high temperature. Therefore, in the embodiments of the present application, the reliability of the entire hydrogen production system is improved, and the hydrogen production energy consumption of the electrolytic cell can be effectively reduced, thereby improving the system efficiency.

On the basis of the above embodiments, optionally, the temperature of all electrolytic cells is detected in real time. When an electrolytic cell is detected to be changed at the highest temperature, the previous electrolytic cell at the highest temperature will be replaced by this electrolytic cell. Referring to FIG. 4, for example, if the temperature of the electrolytic cell 100 was highest in the previous regulating cycle, the temperature of the electrolytic cell 100 is recorded as the highest temperature in the previous regulating cycle. When the temperature of the electrolytic cell 200 is detected to be highest in the current cycle, the temperature of the electrolytic cell 200 is recorded as the highest temperature, and then the steps of S310 to S330 are executed. Optionally, only when the highest temperature of the electrolytic cell that is currently detected is greater than the highest temperature that was detected in the previous cycle to a certain extent, replacement is made. With this configuration, it is beneficial to avoid frequent replacement of the highest temperature value during the control process, which may affect the response speed of the system.

On the basis of the above embodiments, optionally, the control method for the cooling pump includes at least one of the PID regulation and the hysteresis regulation. The control method for the circulating pump includes at least one of the PID regulation and the hysteresis regulation. The control method for the opening degree of the first electrolyte inflow branch pipe includes at least one of the PID regulation and the hysteresis regulation. The control method for the opening degree of the second electrolyte inflow branch pipe includes at least one of the PID regulation and the hysteresis regulation. Herein, the cooling pump and the circulation pump are controlled in the power, the rotate speed or the torque. The opening degree of the first electrolyte inflow branch pipe is controlled by the second switch device, and the opening degree of the second electrolyte inflow branch pipe is controlled by the first switch device. The opening degree of the first electrolyte inflow branch pipe and the second electrolyte inflow branch pipe is controlled by controlling the opening degree of the switch device. Optionally, the control method for the third switching device includes at least one of the PID regulation and the hysteresis regulation.

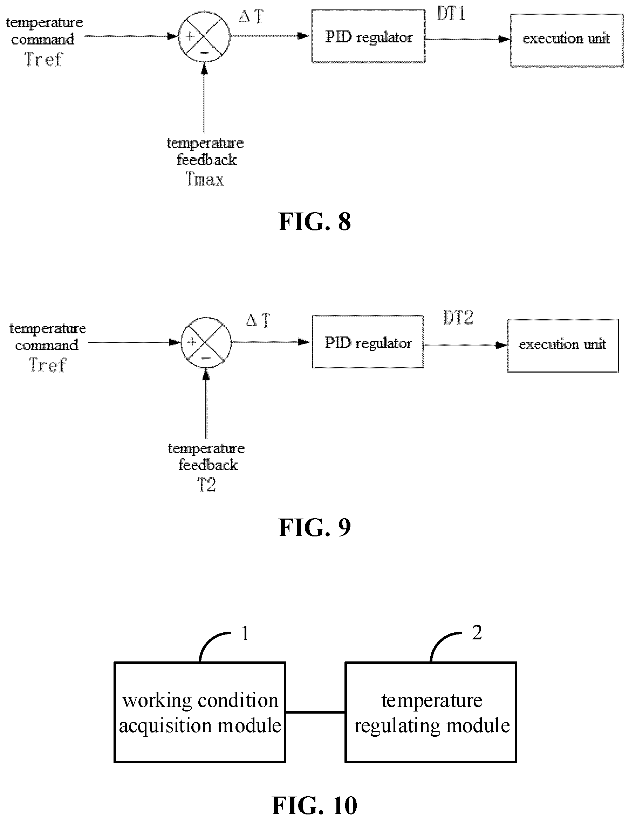

Hereinafter, the PID regulation will be described in detail. FIG. 8 is a control block diagram of a PID regulation according to an embodiment of the present application. Referring to FIG. 8, the PID regulation of the cooling pump is taken as an example for illustration. The temperature command Tref indicates a target temperature of the electrolytic cell, and the temperature feedback Tmax indicates a real-time detected temperature of the second electrolytic cell which is the electrolytic cell having the highest temperature. The PID regulator can be selected from any of the existing types, which is not limited in the present application. An execution unit refers to a driving module that drives operation of the cooling pump, and may be, for example, a thyristor. A temperature difference △T is obtained by comparison between the temperature command Tref and the temperature feedback Tmax, and is then processed by the PID regulator to obtain a control signal DT1. The execution unit is controlled based on the control signal DT1. Specifically, when the temperature feedback Tmax is greater than the temperature command Tref, the PID regulator operates to increase the control signal DT1, which increases the flow rate of the cooling pump so as to reduce the temperature of the electrolyte, thereby controlling the temperature of the electrolytic cell. On the contrary, when the temperature feedback Tmax is less than the temperature command Tref, the PID regulator operates to reduce the control signal DT1, which reduces the flow rate of the cooling pump so as to increase the temperature of the electrolyte. The control method of the PID regulation for the circulating pump is similar, which will not be repeated.

FIG. 9 is a control block diagram of another PID regulation according to an embodiment of the present application. Referring to FIG. 9, the PID regulation for the first switch device is taken as an example for illustration. A temperature command Tref is a target temperature of the electrolytic cell, and a temperature feedback T2 is a real-time detected temperature of the third electrolytic cell. The PID regulator can be selected from any of the existing types, which is not limited in the present application. An execution unit refers to a driving module that drives the switch device to switch on/off or regulates the opening degree of the switch device, and may be an actuating mechanism such as pneumatic, electric or hydraulic mechanism. A temperature difference △T is obtained by comparison between the temperature command Tref and the temperature feedback T2, and is then processed by the PID regulator to obtain a control signal DT2. The execution unit is controlled in response to the control signal DT2. Specifically, when the temperature feedback T2 is greater than the temperature command Tref, the PID regulator operates to decrease the control signal DT2, and the first switch device is controlled to reduce the opening degree so as to reduce the flow rate of the hot electrolyte flowing into the third electrolytic cell, thereby lowering the temperature of the electrolytic cell. On the contrary, when the temperature feedback T2 is less than the temperature command Tref, the PID regulator operates to increase the control signal DT2, and the first switch device is controlled to increase the opening degree so as to increase the flow rate of the hot alkali solution flowing into the electrolytic cell, thereby increasing the temperature of the third electrolytic cell. The method of PID regulation for the second and third switching devices is similar, which will not be repeated.

Hereinafter, the hysteresis regulation will be described in detail. The hysteresis control of the cooling pump is taken as an example for illustration. An upper limit temperature and a lower limit temperature are set, and a difference between the upper limit temperature and the lower limit temperature is defined as a hysteresis loop width. The upper limit temperature is higher than the target temperature by 0.5 time of the hysteresis loop width, and the lower limit temperature is lower than the target temperature by 0.5 time of the hysteresis loop width. When the temperature feedback is higher than the upper limit temperature, the execution unit is controlled in response to a control signal to increase the flow rate of the cooling pump. When the temperature feedback is lower than the lower limit temperature, the execution unit is controlled in response to a control signal to decrease the flow rate of the cooling pump. Herein, the action sensitivity and frequency of the cooling pump can be regulated by regulating the hysteresis loop width. Specifically, the smaller the hysteresis loop width is, the more frequent the action is and the higher the sensitivity is. The larger the hysteresis loop width is, the lower the action frequency is and the lower the sensitivity is. The control method of the hysteresis loop regulation for the circulation pump and switch device is similar, which will not be repeated here.

A thermal management apparatus for a hydrogen production system is further provided in the embodiments of the present application, and is applied to the hydrogen production system provided in any embodiment of the present application. The thermal management apparatus may be implemented by software and/or hardware, and may be integrated into the controller of the hydrogen production system. FIG. 10 is a schematic structural diagram of a thermal management apparatus of a hydrogen production system according to an embodiment of the present application. Referring to FIG. 10, the thermal management apparatus includes:
a working condition acquisition module 1, which is used to acquire a real-time working condition of the hydrogen production system;
a temperature regulating module 2, which is used to regulate the flow rate of the cold electrolyte introduced into each electrolytic cell through the first electrolyte inflow branch pipe and the flow rate of the hot electrolyte introduced into each electrolytic cell through the second electrolyte inflow branch pipe according to the working condition, so as to maintain the temperature of each electrolytic cell at a corresponding preset temperature.

The thermal management apparatus of the hydrogen production system provided in the embodiments of the present application can execute the thermal management method of the hydrogen production system provided in any embodiment of the present application, and has the corresponding functional modules for executing the method as well as the beneficial effects.

Optionally, the temperature regulating module includes:
a cooling unit, which is used to, in case of the working condition that at least one electrolytic cell needs to be cooled, control the flow rate of the cold electrolysis in the first electrolyte inflow branch pipe corresponding to the electrolytic cell to increase, or control the flow rate of the hot electrolysis in the second electrolyte inflow branch pipe corresponding to the electrolytic cell to decrease or even cut off;
a heating unit, which is used to, in case of the working condition that at least one electrolytic cell needs to be heated, control the flow rate of the hot electrolysis in the second electrolyte inflow branch pipe corresponding to the electrolytic cell to increase, or control the flow rate of the cold electrolysis in the first electrolyte inflow branch pipe corresponding to the electrolytic cell to decrease or even cut off.

Optionally, the conditions for cooling the electrolytic cell include: the temperature of the electrolytic cell in each operating state is higher than the corresponding preset cooling temperature, wherein the preset cooling temperatures corresponding to different states are same or different.

The conditions for heating the electrolytic cell include: the temperature of the electrolytic cell in each operating state is lower than the corresponding preset heating temperature, wherein the preset heating temperatures corresponding to different states are same or different.

Optionally, the temperature regulating module is further used to:
if the electrolytic cell is in a standby state, close the corresponding first electrolyte inflow branch pipe; and
in case that the electrolytic cell in the standby state meets the preset conditions, communicate the corresponding second electrolyte inflow branch pipe.

Optionally, the temperature regulating module is further used to regulate the flow rate of the hot electrolyte introduced into the corresponding electrolytic cell according to the temperature of the electrolytic cell after the second electrolyte inflow branch pipe is communicated.

Optionally, the temperature regulating module is further used to, before regulating the flow rate of the cold electrolyte introduced into each electrolytic cell, detect the temperature of each electrolytic cell and find the one having the highest temperature, and define the electrolytic cell having the highest temperature as the second electrolytic cell; and
regulate the flow rate of the cooling pump in the cooling device according to the temperature of the second electrolytic cell so as to cool the second electrolytic cell by the cold electrolyte after the first electrolyte inflow branch pipe corresponding to the second electrolytic cell is communicated.

Optionally, the temperature regulating module is further used to: define the electrolytic cell that is not at the highest temperature as the third electrolytic cell; at the time of communicating the first electrolyte inflow branch pipe corresponding to the second electrolytic cell, it further includes:
regulating the opening degree of the corresponding first electrolyte inflow branch pipe and/or the corresponding second electrolyte inflow branch pipe according to the temperature of the third electrolytic cell so as to maintain a constant temperature in the third electrolytic cell.

Optionally, the control method of regulating the cooling pump includes at least one of the PID regulation and the hysteresis regulation.

The control method for the opening degree of the first electrolyte inflow branch pipe includes at least one of the PID regulation and the hysteresis regulation, and the control method for the opening degree of the second electrolyte inflow branch pipe includes at least one of the PID regulation and the hysteresis regulation.

In summary, in the technical solution of the embodiment of the present application, the post-treatment equipment for the hydrogen production system includes first electrolyte inflow branch pipes and second electrolyte inflow branch pipes. Herein, the first electrolyte inflow branch pipes share one cooling device and are used to introduce the cold electrolyte into the corresponding electrolytic cells. The second electrolyte inflow branch pipes are bypass branch pipes of the cooling device, and are used to introduce the hot electrolyte into the corresponding electrolytic cells. By provision of the first and second electrolyte inflow branch pipes, the electrolytic cell can not only be cooled when being in operation, but also be maintained in a hot standby state when being in a shutdown state, which is beneficial to a rapid start-up of the electrolytic cell. There is no need to provide a separate heating device for heating the electrolytic cell. Therefore, in the embodiments of the present application, each electrolytic cell can be cooled or heated according to the needs, achieving a precise temperature control of each electrolytic cell while reducing costs and improving the system efficiency. Furthermore, according to the embodiments of the present application, the temperature of the electrolytic cell in the hot standby state may be maintained by the heat generated from the electrolytic cell in operation, achieving a heat-cyclic utilization, which is beneficial to reduction of the overall power consumption of the hydrogen production system.

It should be understood that various forms of processes shown above can be used to reorder, add, or delete the steps. For example, the steps described in the present application can be executed in parallel, sequentially, or in different orders, as long as they can achieve the desired results of the technical solution of the present invention, which is not limited herein

The above specific implementation methods do not constitute a limitation on the scope of the present application. Those skilled in the art should understand that various modifications, combinations, sub-combinations, and substitutions can be made based on design requirements and other factors. Any modifications, equivalent substitutions, and improvements made within the concept and principles of the present application shall be included within the scope of the present application.

## Claims

1. A hydrogen production system, comprising:
at least two electrolytic cells; and
a post-treatment apparatus shared by the at least two electrolytic cells and comprising first electrolyte inflow branch pipes and second electrolyte inflow branch pipes, wherein
the first electrolyte inflow branch pipes share a single cooling device to introduce a cold electrolyte into the corresponding electrolytic cells, and the second electrolyte inflow branch pipes are bypass branch pipes of the cooling device to introduce a hot electrolyte into the corresponding electrolytic cells.

2. The hydrogen production system according to claim 1, wherein the post-treatment apparatus further comprises:
a gas-liquid separation unit arranged at an electrolyte outlet of the at least two electrolytic cells and shared by the at least two electrolytic cells; and
an electrolyte circulation device arranged in a electrolyte circulation pipeline.

3. The hydrogen production system according to claim 1, wherein
a common electrolyte inlet of the first electrolyte inflow branch pipes is arranged downstream of an electrolyte outlet of the cooling device, and
a common electrolyte inlet of the second electrolyte inflow branch pipes is arranged upstream of an electrolyte inlet of the cooling device.

4. The hydrogen production system according to claim 1, wherein
a first switch device is provided in the second electrolyte inflow branch pipe and is configured to control a flow rate of the hot electrolyte.

5. The hydrogen production system according to claim 1, wherein
a second switch device is provided in the first electrolyte inflow branch pipe and is configured to control a flow rate of the cold electrolyte.

6. The hydrogen production system according to claim 1, wherein
the post-treatment apparatus further comprises a third switch device arranged in each of the electrolytic cells,
the third switch device is located at a electrolyte inlet of the corresponding electrolytic cell,
the first electrolyte inflow branch pipe and the second electrolyte inflow branch pipe are connected to the third switch device, and
the third switch device is configured to control a total flow rate of electrolyte introduced into the corresponding electrolytic cell.

7. The hydrogen production system according to any one of claims 4 to 6, wherein
the switch devices comprise at least one of a regulating valve and a switching valve.

8. A thermal management method for a hydrogen production system, which is applied to the hydrogen production system according to any one of claims 1 to 7, wherein the thermal management method comprises the steps of:
acquiring a working condition of the hydrogen production system in real time;
regulating a flow rate of the cold electrolyte introduced into the electrolytic cells through the respective first electrolyte inflow branch pipes and a flow rate of the hot electrolyte introduced into the electrolytic cells through the respective second electrolyte inflow branch pipes according to the working condition, so as to maintain temperatures of the individual electrolytic cells at respective preset temperatures.

9. The thermal management method for the hydrogen production system according to claim 8, wherein the step of regulating the flow rates of the cold electrolyte and the hot electrolyte introduced into the electrolytic cell according to the operating states comprises at least one of the flowing:
in case of the working condition that at least one electrolytic cell needs to be cooled, controlling the flow rate of the cold electrolyte in the first electrolyte inflow branch pipe corresponding to the at least one electrolytic cell to increase, or controlling the flow rate of the hot electrolyte in the second electrolyte inflow branch pipe corresponding to the at least one electrolytic cell to decrease or cut off;
in case of the working condition that at least one electrolytic cell needs to be heated, controlling the flow rate of the hot electrolyte in the second electrolyte inflow branch pipe corresponding to the at least one electrolytic cell to increase, or controlling the flow rate of the cold electrolyte in the first electrolyte inflow branch pipe corresponding to the at least one electrolytic cell to decrease or cut off.

10. The thermal management method for the hydrogen production system according to claim 9, wherein
a condition that the electrolytic cell needs to be cooled comprises that: the temperature of the electrolytic cell in various operating states is higher than a corresponding preset cooling temperature, wherein the preset cooling temperatures corresponding to different operating states are same or different,
a condition that the electrolytic cell needs to be heated comprises that: the temperature of the electrolytic cell in various operating states is lower than a corresponding preset heating temperature, wherein the preset heating temperatures corresponding to different operating states are same or different.

11. The thermal management method for the hydrogen production system according to claim 8, wherein the step of regulating the flow rates of the hot electrolyte and the cold electrolyte introduced into the electrolytic cell according to the working condition comprises:
in case that the electrolytic cell is in a standby state, closing the corresponding first electrolyte inflow branch pipe, and
in case that the electrolytic cell in the standby state meets a preset condition, communicating the corresponding second electrolyte inflow branch pipe.

12. The thermal management method for the hydrogen production system according to claim 11, wherein, after the second electrolyte inflow branch pipe is communicated, the thermal management method further comprises:
regulating the flow rate of the hot electrolyte introduced into the electrolytic cell according to the temperature of this electrolytic cell.

13. The thermal management method for the hydrogen production system according to claim 8, wherein, before the step of regulating the flow rate of the cold electrolyte introduced into the individual electrolytic cells, the thermal management method further comprises:
detecting the temperature of each of the electrolytic cells, finding the electrolytic cell at the highest temperature, and defining the electrolytic cell at the highest temperature as a second electrolytic cell; and
regulating a flow rate of a cooling pump in the cooling device according to the temperature of the second electrolytic cell so as to cool the second electrolytic cell by the cold electrolyte after the first electrolyte inflow branch pipe corresponding to the second electrolytic cell is communicated.

14. The thermal management method for the hydrogen production system according to claim 13, further comprising:
defining the electrolytic cell that is not at the highest temperature as a third electrolytic cell; wherein,
at the time of communicating the first electrolyte inflow branch pipe corresponding to the second electrolytic cell, regulating an opening degree of the corresponding first electrolyte inflow branch pipe and/or the corresponding second electrolyte inflow branch pipe according to a temperature of the third electrolytic cell to maintain a constant temperature in the third electrolytic cell.

15. The thermal management method for the hydrogen production system according to claim 14, wherein a control method for the cooling pump comprises at least one of a PID regulation and a hysteresis regulation,
a control method for the opening degree of the first electrolyte inflow branch pipe comprises at least one of the PID regulation and the hysteresis regulation, and
a control method for the opening degree of the second electrolyte inflow branch pipe comprises at least one of the PID regulation and the hysteresis regulation.

16. A thermal management apparatus for a hydrogen production system, which is applied to the hydrogen production system according to any one of claims 1 to 7, wherein the thermal management apparatus comprises:
a working condition acquisition module, which is configured to acquire a real-time working condition of the hydrogen production system; and
a temperature regulating module, which is configured to regulate the flow rate of the cold electrolyte introduced into the electrolytic cells through the respective first electrolyte inflow branch pipes and the flow rate of the hot electrolyte introduced into the electrolytic cells through the respective second electrolyte inflow branch pipes according to the working condition, so as to maintain the temperature of the electrolytic cells at the respective preset temperatures.
